# EUROPEAN PATENT APPLICATION

(11) **EP 2 818 044 A1**
(43) Date of publication of application: **31.12.2014**
(21) Application number: 14173979.7
(22) Date of filing: 25.06.2014
(51) Int. Cl.: A01K 45/00, B66F 9/19

(54) **A system and method for handling live poultry**

(30) Priority: 26.06.2013 IT TO20130528
(71) Applicant: Zanotti, Massimo, 25064 Gussago (BS) (IT)
(72) Inventor: Zanotti, Massimo, 25064 Gussago (BS) (IT)
(74) Representative: Buzzi, Franco

(57) **Abstract**

A system and method for handling live poultry by means of transporting units (10) including a quadrangular supporting frame (2) and a plurality of drawer-type cages (5) arranged in a superimposed and extractable condition within the supporting frame (2). The supporting frame (2) of the transporting unit (10) is devoid of a lower pallet, and is manipulable by means of a lifting truck (11) that is provided with a roller platform (13, 14) for moving the transporting unit (10).

## Description

### Field of the invention

The present invention relates in general to the handling of live poultry in view of the transport from breeding farms to slaughterhouses, typically on-board lorries.

In particular, the invention relates to a system and method for handling live poultry by means of a transporting unit including a quadrangular supporting frame and a plurality of drawer-like cages inserted in a superimposed condition and in an extractable manner within the supporting frame.

### State of the prior art

Transporting units of live poultry of the type indicated above are described and illustrated, for example, in patent documents EP-1330952B1 and WO-2011/010329 of which the Applicant is co-inventor, as well as in the Italian patent application no. TO2013A000214 by the same Applicant, unpublished at the date of filing of the present application.

The supporting frame of the transporting unit, which can be configured to hold a single stack or two side-by-side stacks of drawer-like cages, is typically provided at the bottom with a pallet or platform with seats for introducing the forks of a conventional lifting truck, by means of which the transporting unit containing the live poultry is picked up from the breeding farm and loaded on the platform of the transport vehicle. At the slaughterhouse, a similar forklift truck picks up the transporting unit from the vehicle, and transfers it to the entrance of the slaughterhouse by extraction of the drawer-like cages from the supporting frame that, once emptied, are again inserted into the supporting frame for the return of the transporting unit to the breeding farm.

The presence of the pallet, which is necessary for the interaction with the forks of the lifting truck, makes the supporting frame of the transporting units currently in use particularly heavy: indeed, it represents about 50% of the weight of the entire structure. In addition, the cost of the pallet is particularly high, as it represents about 40% of the entire supporting frame.

Added to this is the not infrequent possibility that, during the manoeuvres of the lifting truck, the forks are incorrectly inserted within the relative seats of the pallet, with the consequent risk of damage, not only of the supporting frame, but also of the drawer-like cages immediately above the pallet. Also taking into account the fact that these operations are often carried out in conditions of uneven ground, and sometimes with poor lighting, as well as rapidly, the risks of damage mentioned above are not infrequent, and involve considerable repair costs and maintenance of the transporting units.

### Summary of the invention

The object of the present invention is to overcome the aforesaid drawbacks.

According to a first aspect, this object is achieved thanks to a system of handling live poultry as defined in claim 1. Thanks to this solution idea, several important advantages are obtained.

Firstly, the structure of the supporting frame of the transporting unit is simplified, with a consequent appreciable reduction in the manufacturing costs, and above all, reduced in weight. For indicative purposes, in the case of a lorry platform having a working length of 13.5m, filled in its entire length and width with the transporting unit according to the invention, it is possible to achieve a weight reduction of up to 2000 kg and above.

Secondly, the handling of the transporting units during the loading operations of the transport lorry eliminates any risk of damage due to erroneous manoeuvres of the forks of the lifting trucks, which are evidently eliminated.

Finally, the absence of the pallet allows altering the height of the supporting frame in order to increase the number of drawer-like cages of the stack(s) by one unit, with an increase in the order of 10% of the load of poultry on-board the lorry.

According to another advantageous characteristic of the invention, the handling system can include a distinct and separate temporary support base of the transporting unit, conveniently provided with raised platforms arranged frontally and dorsally to the supporting frame. This support base is advantageously used during the loading of the poultry at the breeding farm, both to avoid directly resting the supporting frame on the ground, and any consequent contamination, thereby keeping it cleaner and easier to wash, as well as making the placing of poultry in drawer-like cages at the top of the stack (s) easier, thus reducing the risk of injury and damage to the chickens.

According to a further aspect, the invention provides a method for handling live poultry.

### Brief description of the drawings

The invention will now be described in detail with reference to the accompanying drawings, provided purely by way of non-limiting example, in which:
Figure 1 is a schematic perspective view of a transporting unit for systems for handling live poultry according to the prior art,
Figure 2 is an analogous view to Figure 1 showing the transporting unit of the handling system according to the invention,
Figure 3 is a perspective view showing an optional accessory of the transporting unit of Figure 2,
Figure 4 is an analogous view to Figure 2 showing the transporting unit in the partially extracted condition of the relative drawer-like cages, and accompanied by an optional variant of the accessory of Figure 3,
Figure 5 is an elevational side view showing a unique lifting truck used with the transporting unit in the handling system according to the invention,
Figure 6 is a perspective view showing a handling step carried out by the system according to the invention,
Figure 7 is a side elevational view of Figure 6,
Figure 8 shows a part of Figure 6 on an enlarged scale,
Figure 9 is a side elevational view of Figure 8,
Figure 10 is a top plan view of Figure 8, and
Figure 11 is a perspective view of a detail of Figure 10 on an enlarged scale.

### Detailed description of the invention

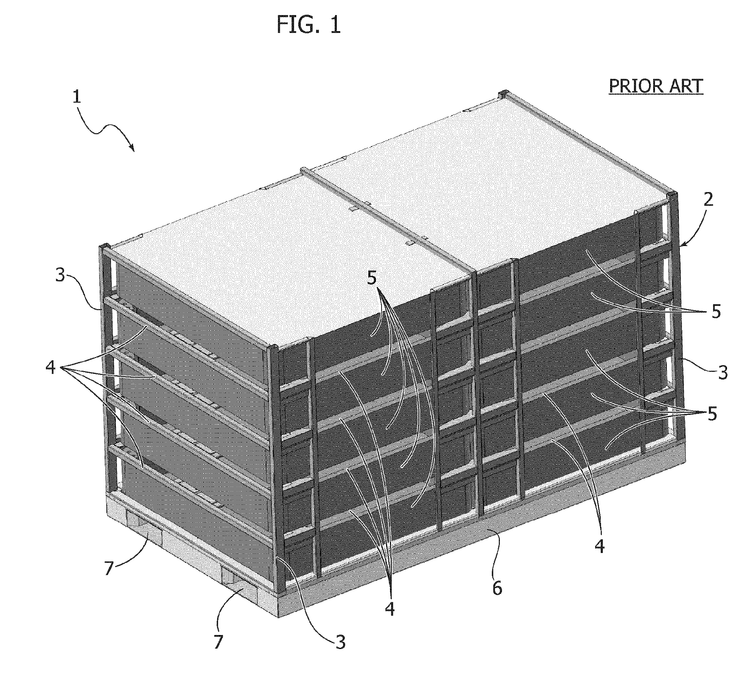

Figure 1 shows an example of a transporting unit for systems for handling live poultry from the site of the breeding farm to the slaughterhouse according to the prior art. This transporting unit, indicated as a whole with 1, is of the type described and illustrated in the Italian patent application no. TO2013A000214 by the same Applicant, unpublished at the date of filing of the present application.

The transporting unit 1 comprises a sturdy metal supporting frame 2 having a quadrangular shape and formed by vertical uprights 3, interconnected by horizontal elements 4, and arranged to bear a plurality of drawer-like extractable cages 5 for the introduction and containment of live poultry. The drawer-like cages 5 are, in this case, arranged in a superimposed condition on two side-by-side stacks: it should nevertheless be noted that, alternatively to this double configuration, the known transporting unit 1 can also be of the single type, or rather, where the supporting frame 2 is designed to hold a single stack of drawer-like cages 5.

In both cases, the transporting unit 1 according to the prior art is equipped at its bottom with an integrated pallet 6, i.e. fixed rigidly and permanently to the supporting frame 2, which is conventionally provided with a pair of longitudinal seats 7 for inserting the forks of a conventional lifting truck.

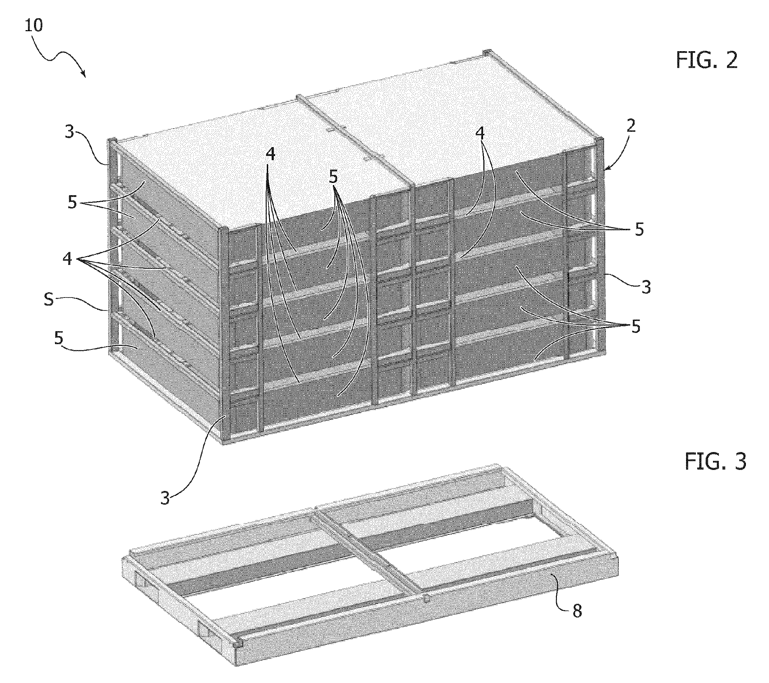

Referring now to Figure 2, wherein identical or similar parts to those already described with reference to Figure 1 are indicated with the same reference numerals, the transporting unit 10 of the handling system according to the invention also comprises a supporting frame 2 of a similar quadrangular shape, formed by vertical uprights 3 and horizontal elements 4, and within which two side-by-side stacks of drawer-like cages 5 are inserted, in a superimposed condition.

Unlike the transporting unit 1 according to the prior art described above, the transporting unit 10 of the handling system according to the invention is devoid of the lower pallet, so that the supporting frame 2 normally rests directly on the ground.

Thanks to the elimination of the integrated pallet with the supporting frame 2, the transporting unit 10 according to the invention has an evidently simplified structure, together with an appreciably lower weight, compared to the transporting unit 1 according to the prior art, with the advantage of a significant reduction of the weight on board the lorry used for the transport of poultry from the breeding site to the slaughterhouse.

As the ground of the breeding farm is often uneven and contaminated by organic residues, to avoid direct contact of the supporting frame 2 with the ground, an optional accessory, a pallet 8 (Figure 3), may be provided, distinct and separate from the transporting module 10, and on which the supporting frame 2 can be temporarily rested upon during the operations of loading of the poultry within the drawer-like cages 5.

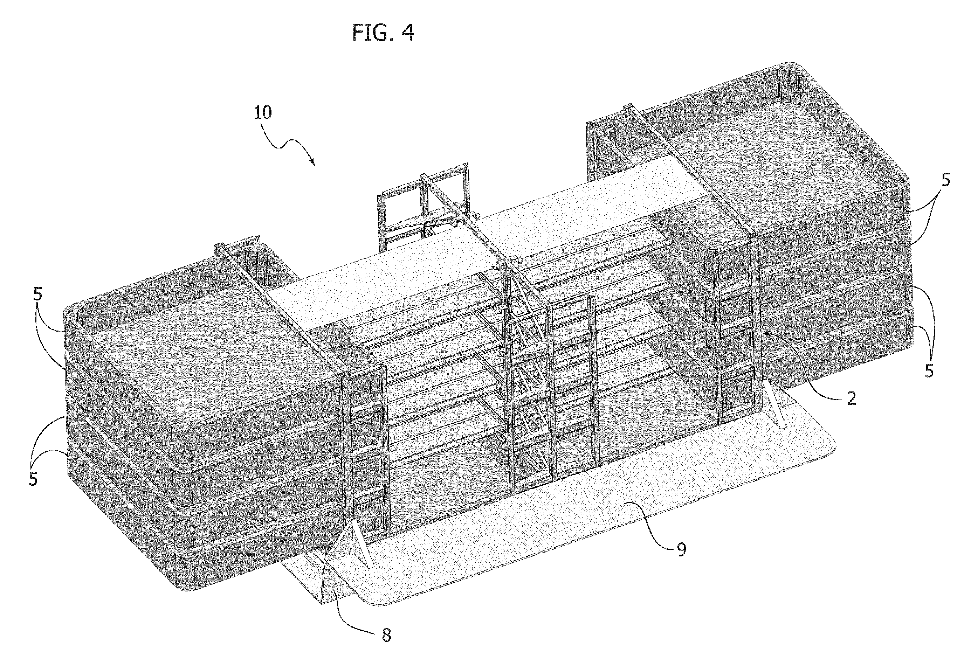

To facilitate such loading operations, the separate pallet 8 can be configured in the manner represented in Figure 4, or rather be provided with raised platforms 9 arranged frontally and dorsally to the supporting frame 2, and on which operators can position themselves, making it easier to access the highest drawer-like cages 5 of the two stacks. In Figure 4, the drawer-like cages 5 are represented as being partially extracted from opposite ends with respect to the supporting frame 2, to allow convenient introduction of the poultry within them, according to the methodology described and illustrated in the already cited Italian patent application no. TO2013A000214.

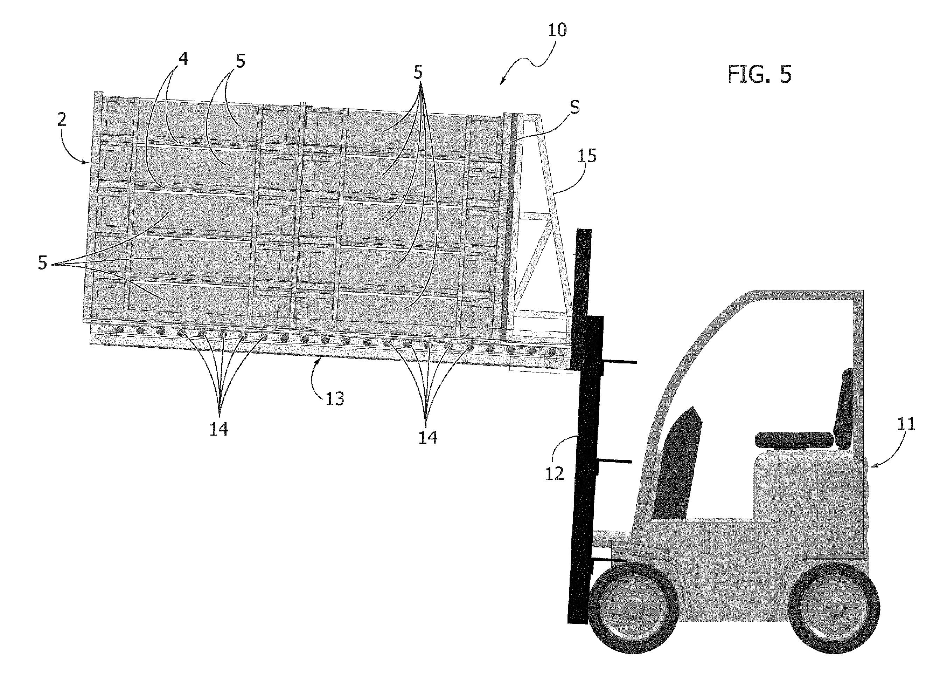

For handling of the transporting unit 10, the system according to the invention provides a unique lifting truck, represented schematically in Figures 5 to 7. This lifting truck consists of a self-propelled vehicle 11 of conventional type, frontally bearing a vertical guide structure 12 along which a horizontal platform 13 is movable, in place of the normal fork group, of which the lifting truck 11 is equipped.

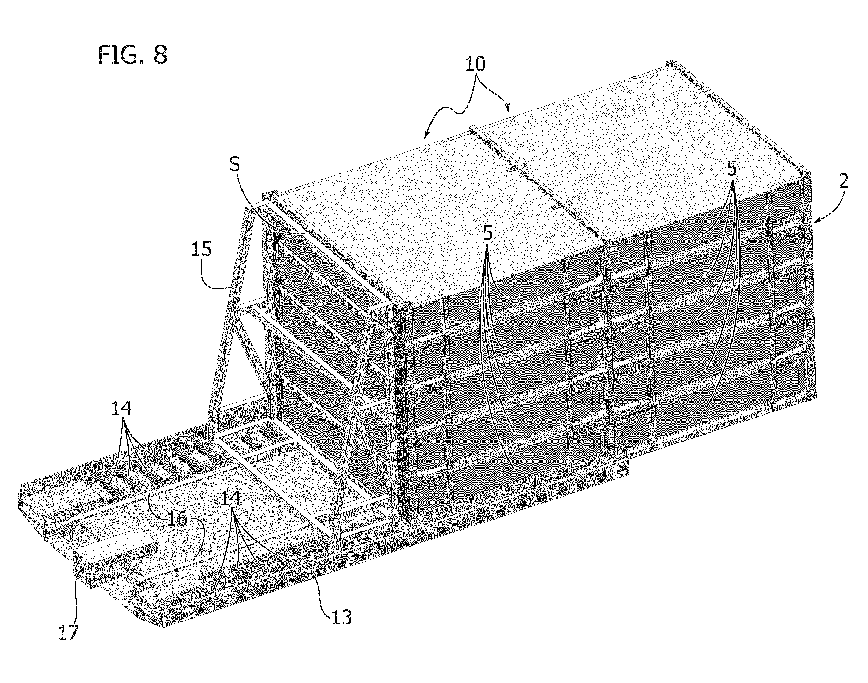

The platform 13, the length of which essentially corresponds to that of the transporting unit 10, is provided with a plurality of idle transverse rollers 14 and an attachment structure 15, longitudinally displaceable along the platform 13 in one direction and in the opposite direction, for example by means of a pair of motorized chains 16, most evident in Figures 8-10.

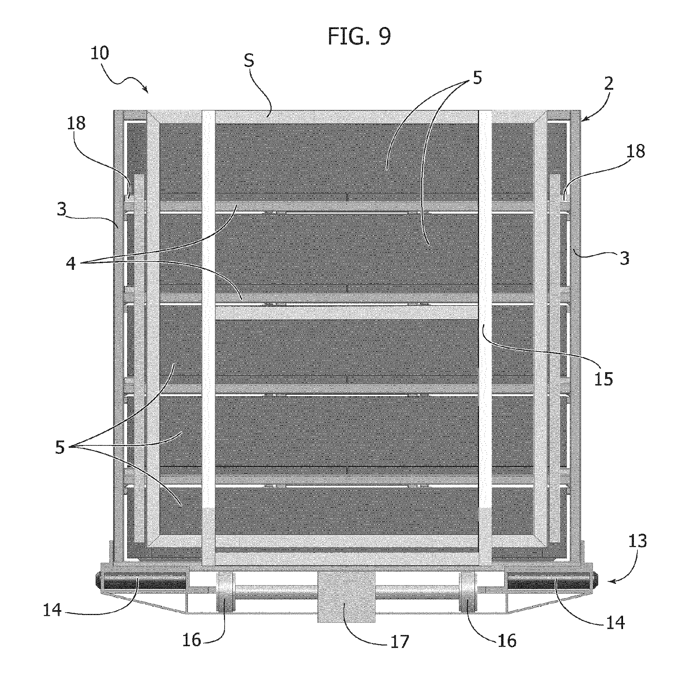

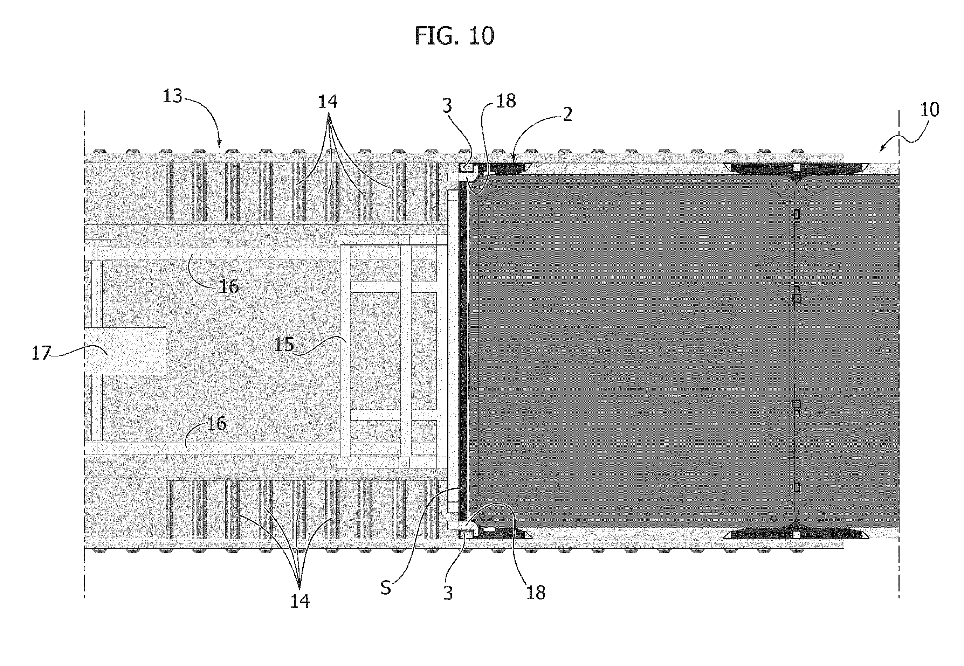

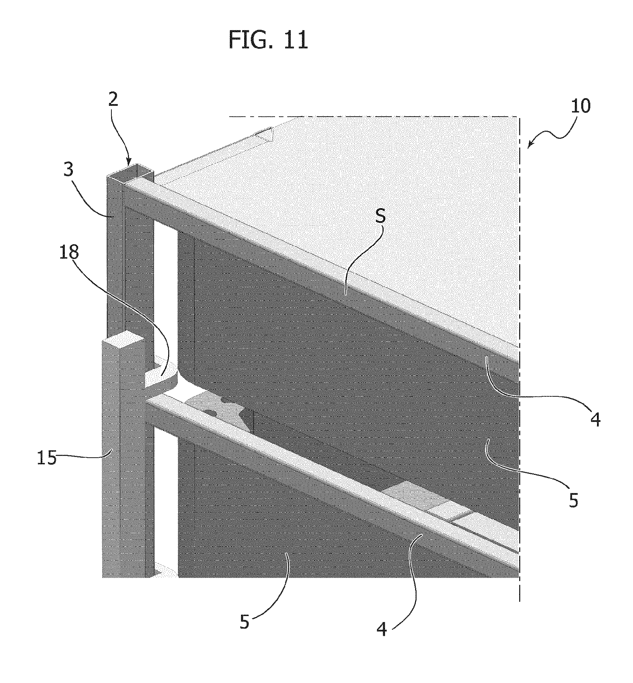

The attachment structure 15 has width and height dimensions essentially corresponding to those of an end side of the supporting frame 2 of the transporting module 1, indicated with S, and is configured to be able to temporarily anchor to this side S in the manner represented in Figures 9 and 10, and in greater detail in Figure 11. This attachment structure 15 is provided with at least one pair of swivel hooks 18, configured to engage the corresponding uprights 3 of the supporting frame 2 from behind, at the side S.

The platform 13 with the rollers 14 is also provided with a stop device 17 for locking the same side S of the attachment structure 15 in its fully retracted position, represented in Figure 5, where it is arranged in the immediate vicinity of the vertical guide 12 of the lifting truck 11, and interacts at the bottom with the stop device 17.

The lifting and lowering of the platform 13 along the vertical structure of the guide 12 is operated in a conventional manner, for example by motorized chains not illustrated.

The handling methodology of the transporting unit 10 is exemplified in Figures 5 to 7.

Following the filling of the drawer-like cages 5 each inserted in turn within the supporting frame 2, possibly temporarily positioned on the pallet 8 or 9, the transporting module 10 is picked up from the lifting truck 11. For this operation, the attachment structure 15 is made to advance up to the free end of the platform 13, and is then anchored to the side S of the supporting frame 2 by means of the swivel hooks 18, and finally retracted until it stops against the stop device 17, in order to pull and drag the transporting unit 10 resting on the rollers 14 on the platform 13.

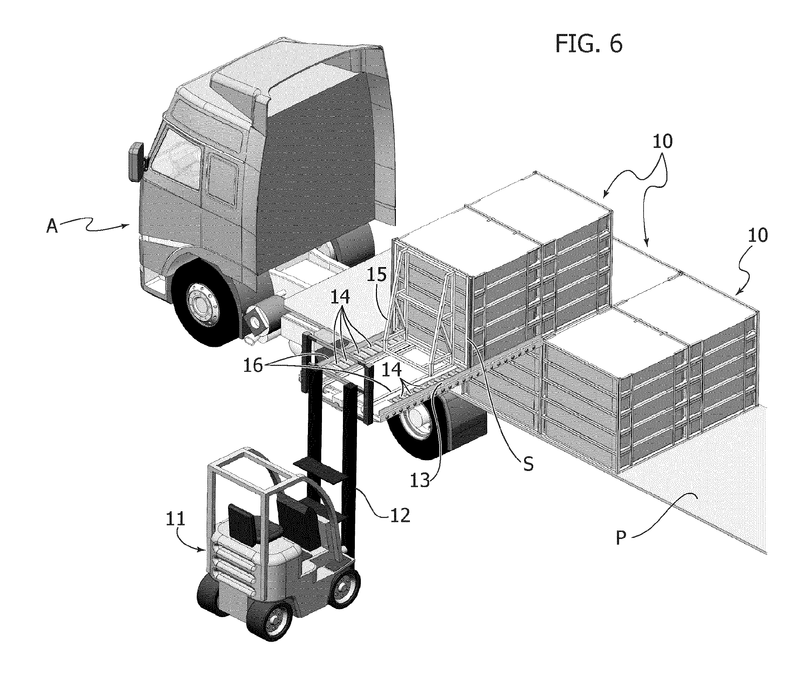

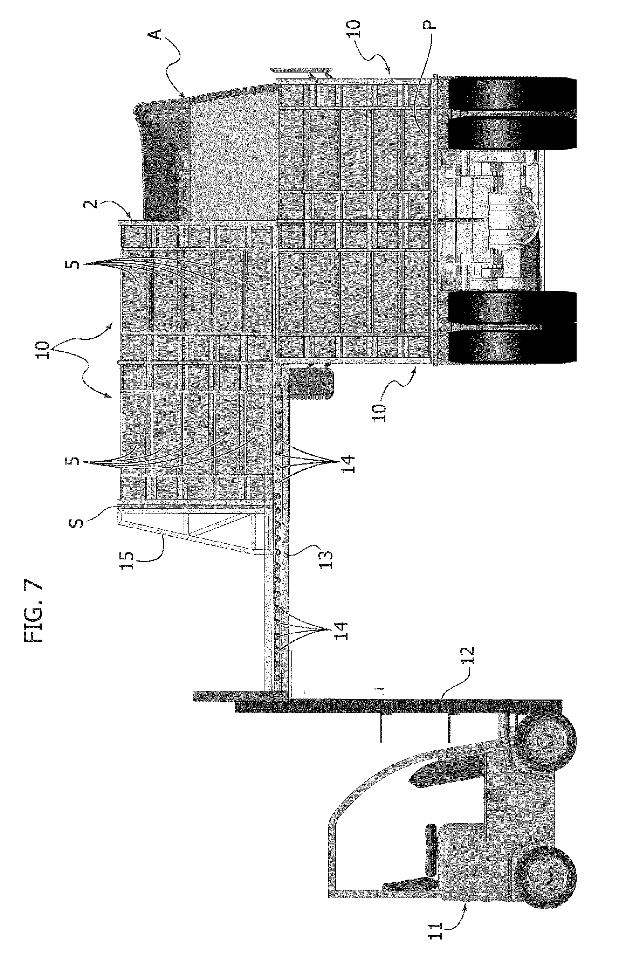

The platform 13 with the transporting module 10, thus locked by means of the stop device 17 is then raised along the vertical guide 12 (Figure 5) and the lifting truck 11 is positioned at the side of the transport lorry A to deposit the module 10 directly onto the loading platform P of the lorry, or above a previously deposited module 10 (Figures 6 and 7). Once the required unloading position is achieved, the attachment structure 15 is again moved towards the free end of the platform 13 so as to push the transporting unit 10 along the rollers 14 in order to deposit it in the chosen position, following the disengagement of the hooks 18.

The unloading operations of the transporting modules 10 from the lorry A on arrival at the slaughterhouse obviously takes place in reverse order: the platform 13 is positioned on the lifting truck 11 alongside the transporting unit 10 to be unloaded, which, following the engagement of the hooks 18 with the relative supporting frame 2, is pulled by the attachment structure 15 and dragged onto the rollers 14 of the platform 13 for subsequent transfer to the slaughterhouse.

Of course, the details of construction and the embodiments may be widely varied with respect to what is described and illustrated, without departing from the scope of the present invention as defined in the following claims. Thus, although the transporting unit described with reference to the illustrated example is of the double type, or rather having dimensions that accommodate a dual stack of drawer-like cages, the invention is equally advantageously applicable to single transporting units, or rather, sized to contain a single stack of drawer-like cages.

## Claims

1. A system for handling live poultry comprising transporting units (10) including a quadrangular supporting frame (2) and a plurality of drawer-type cages (5) arranged in a superimposed and extractable condition within the supporting frame (2), and a lifting truck (11) for the handling of the transporting units normally designed to co-operate with a lower pallet of said supporting frame (2), **characterized in that** the supporting frame (2) of the transporting unit (10) is devoid of a lower pallet, and **in that** the lifting truck (11) is provided with a roller platform (13, 14) for moving the pallet-free transporting unit (10) and an attachment structure (15) having dimensions essentially corresponding to those of one side (S) of the supporting frame (2) of the transporting unit (10), and provided with hooking members (18) on said one side (S), and motorized means (16) for the traction and thrust displacement of said attachment structure (15) along said roller platform (13, 14).

2. A handling system according to claim 1, **characterized in that** said roller platform (13, 14) is also provided with a stop (17), configured to interact with said one side (S) of the supporting frame (2) of the transporting unit (10) for locking said frame when it is entirely positioned on the roller platform (13, 14).

3. A handling system according to claims 1 or 2, **characterized in that** it includes a temporary support base (8) of the pallet-free transporting unit (10).

4. A handling system according to claim 3, **characterized in that** said temporary support base (8) is provided with raised platforms (9) arranged frontally and dorsally relative to the supporting frame (2) of the transporting unit (10).

5. A method for handling live poultry by means of a lifting truck (11) and transporting units (10) including a quadrangular supporting frame (2) and a plurality of drawer-type cages (5) arranged in a superimposed and extractable condition within the supporting frame (2), wherein the lifting truck (11) is normally designed to co-operate with a lower pallet of said supporting frame (2) of the transporting unit (10), **characterized in that** it consists of eliminating said lower pallet and equipping the lifting truck (11) with a roller platform (13, 14) and an attachment structure (15) having dimensions essentially corresponding to those of one side (S) of the supporting frame (2) of the transporting unit (10), and engaging said attachment structure (15) to said one side (S) for the picking up, moving and depositing of the pallet-free transporting unit (10).

6. A method according to claim 5, **characterized in that** it further comprises the locking step of said one side (S) of the supporting frame (2) of the transporting unit (10), when this is entirely positioned on the roller platform (13, 14).
